# EUROPEAN PATENT APPLICATION

(11) **EP 1 924 029 A1**
(43) Date of publication of application: **21.05.2008**
(21) Application number: 06291774.5
(22) Date of filing: 13.11.2006
(51) Int. Cl.: H04L 12/28, H04B 7/24, G01S 5/02, H01Q 1/12, H01Q 3/04, H01Q 1/24

(54) **Method for controlling beam-forming at a base station, and a base station**

(71) Applicant: Alcatel Lucent, 75008 Paris (FR)
(72) Inventor: Schlesinger, Heinz, 74395 Mundelsheim (DE)
(74) Representative: Richardt, Markus Albert

(57) **Abstract**

A method for controlling beam-forming at a base station (1) in a radio-based communication system, said base station (1) using an antenna array (3). The proposed method comprises the steps of:
- receiving a first position signal (SS1) through a first antenna element (3.1) of the antenna array (3);
- receiving a second position signal (SS2) through a second antenna element (3.2) of the antenna array (3);
- determining from the first and second position signals (SS1,SS2) an orientation of said antenna array (3);
- adjusting the orientation of the antenna array (3) in accordance with the determined orientation.
A base selection (1) for such a method.

## Description

### Background of the invention

The present invention relates to a method for controlling beam-forming at a base station in a radio-based communication system, said base station using an antenna array.

The present invention also relates to a base station for use in a radio-based communication system, comprising an antenna array for transmitting and receiving radio signals, said antenna array comprising a plurality of antenna elements.

In radio-based communication systems, a Base Transceiver Station (BTS) or base station is generally devised to feed at least one dedicated end terminal (e.g. a mobile) or a dedicated area with a suitably oriented or directed radio signal. An exemplary application for this technique is wireless DSL (Digital Subscriber Line) with Wimax (Worldwide Interoperable Microwave Access) BTS.

One way of concentrating radiated output power of a BTS in a given spatial sector is using beam-forming antenna techniques employing adaptive beam-forming mechanisms. As known to a person skilled in the art, adaptive beam-forming requires performing measurements at the base station in order to track the direction to which a radiated beam must be directed. Furthermore, received interfering radio signals can be cancelled by means of suitable adaptive algorithms. This requires additional hardware expenditure, e.g. a Digital Signal Processor (DSP), etc.

### Object of the invention

It is the object of the present invention to provide an alternative to adaptive beam-forming in order to determine the direction of a beam radiated by a base station which does not require additional hardware expenditure.

### Summary of the invention

According to a first aspect of the present invention, the object is achieved by providing a method of the above-defined type comprising the steps of:
- receiving a first position signal through a first antenna element of the antenna array;
- receiving a second position signal through a second antenna element of the antenna array;
- determining from the first and second position signals an orientation of said antenna array;
- adjusting the orientation of the antenna array in accordance with the determined orientation.

According to a second aspect of the present invention, the object is achieved by providing a base station of the above-defined type, comprising:
- a first antenna element of said plurality of antenna elements being adapted to receive a first position signal;
- a second antenna element of said plurality of antenna elements being adapted to receive a second position signal;
- means for determining from said first and second position signals an orientation of said antenna array;
- means for adjusting the orientation of the antenna array in accordance with the determined orientation.

Thus, in accordance with a basic idea underlying the present invention, the direction of the beams can be estimated using positional information received by two antenna elements of the antenna array so that the beam direction is known in an absolute and not only in a relative way.

As an antenna array comprises several antenna elements, positional signals can be received successively by two distinct antenna elements in the antenna array so that an orientation of the antenna array, i.e. the direction of a transmitted radio beam, can be deduced at the base station. In this way, the beam direction is known absolutely and can be adjusted in accordance with the predefined transmission requirements.

In order to achieve reliable and accurate orientation values for the antenna array, in an embodiment of the method in accordance with the present invention the first and second position signals are satellite position signals.

In a corresponding embodiment of the base station in accordance with the present invention the first and second position signals are satellite position signals and that the first and second antenna elements are adapted to receive said satellite position signals.

As known to a person skilled in the art, receiving signals from a plurality of at least four different satellites is required for determining position information. However, throughout the present document it is assumed that an appropriate number of satellites is "visible", and a corresponding plurality of satellite signals received by a given antenna elements will therefore simply be referred to as a satellite position signal.

In a further embodiment of the base station in accordance with the present invention said means for determining the orientation of the antenna array are operably connected with a GPS receiver module generally comprised in the base station. In this way, highly accurate and reliable position information is available at the base station for determining an orientation of the antenna array. As an alternative to GPS, other satellite positioning systems such as Galileo or Glonass can be used in the context of the present invention.

The inventive solution can also be used for reducing interference effects in a radio-based communication system. In a corresponding embodiment of the method in accordance with the present invention, the latter comprises nulling an interfering radio signal in a given direction from the base station by adjusting the orientation or configuration of the antenna array.

In a corresponding embodiment of the base station in accordance with the present invention said means for adjusting the orientation of the antenna array are further adapted to null an interfering radio signal in a given direction from the base station.

Thus, if an interfering signal in a certain direction is known, the interfering signal can be nulled, and radio beams can be adjusted in accordance with said direction of interference in order to reduce interference effects.

Further advantages and characteristics of the present invention can be gathered from the following description of preferred embodiments given by way of example only with reference to the enclosed drawings. Features mentioned above as well as below can be used in accordance with the present invention either individually or in conjunction. The described embodiments are not to be regarded as an exhaustive enumeration but rather as examples with respect to a basic idea underlying the present invention.

### Brief description of the drawings

- Figure 1: is a schematic block diagram of a base station for use in a radio-based communication system in accordance with the present invention; and
- Figure 2: is a flow chart of an embodiment of the method in accordance with the present invention.

### Detailed description of the drawings

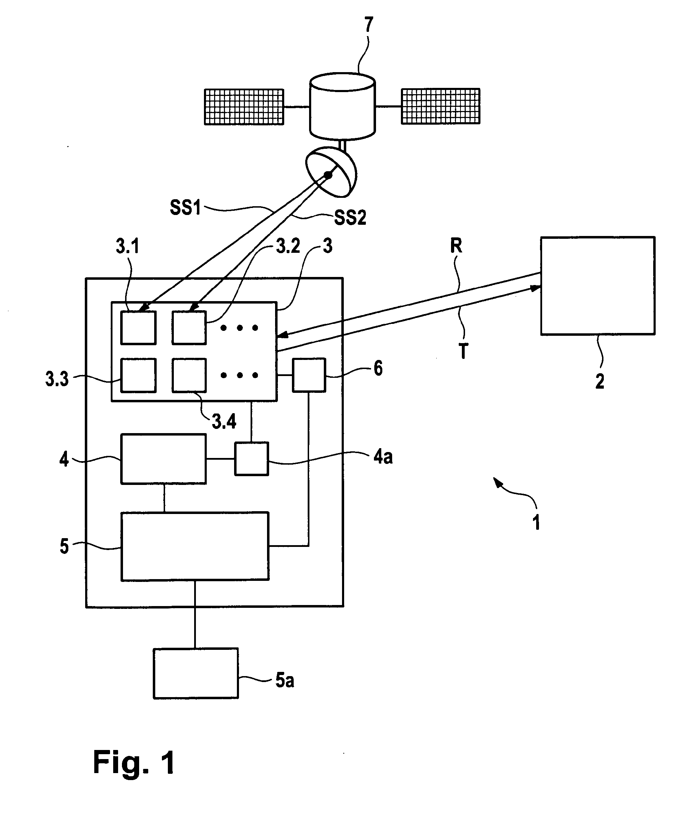

Fig. 1 is a schematic block diagram of a base station 1 for use in a radio-based communication system. Hereinafter, base station 1 will also be referred to as Base Transceiver Station (BTS) and is intended for feeding a dedicated end terminal (mobile terminal), building, or area with a radio signal. In the embodiment of Fig. 1, said dedicated terminal/area is generally indicated by means of box 2. A preferred field of use is wireless DSL, in particular with a Wimax BTS.

Base station 1 comprises an array antenna 3 formed by a number of antenna elements 3.1-3.4, only four are depicted for reason of clarity. In this way, said plurality of antenna elements can also be referred to as an antenna array.

Base station 1 further comprises means 4 for determining an orientation of antenna array 3, as will be explained in detail later. Said means 4 are connected with a GPS (Global Positioning System) receiver module 4a.

Base station 1 further comprises means 5 for adjusting the orientation of the antenna array 3 in accordance with the orientation determined by said orientation determining means 4. A functioning of orientation adjusting means 5 will also be explained in detail later.

Base station 1 also comprises input/output (I/O) means 5a connected with said orientation adjusting means 5, and motor means 6 in operable connection with both orientation adjusting means 5 and antenna array 3.

In order to determine an absolute orientation of antenna array 3 for transmission T and receiving R purposes in a radio communication system without requiring any adaptive beam-forming methods and/or a known local position of the BTS 1, at least a first antenna element 3.1 of antenna array 3 and at least a second antenna element 3.2 of antenna array 3 are adapted to receive position signals from an external source of position signals. In the embodiment of Fig. 1, said external source is depicted as a satellite 7, in particular a satellite of a known positioning system such as GPS, Galileo, or the like.

As will be appreciated by a person skilled in the art, in order to derive position information said first and second antenna elements 3.1, 3.2 each have to receive position signals from a plurality of satellites 7 (not shown). In Fig. 1, furthermore only two position signals are depicted for reason of clarity which are denoted SS1 and SS2, respectively. The received position signals SS1, SS2 are then transmitted to GPS receiver module 4a in connection with orientation determining means 4. GPS receiver module 4a is generally available in BTS 1 for reference system clock derivation or synchronisation such that no additional hardware expenditure is required. By means of GPS receiver module 4a orientation determining means 4 is enabled to deduce an absolute orientation of antenna array 3 from the position signals SS1 and SS2 received by first and second antenna elements 3.1, 3.2, respectively. In other words, using the information comprised in position signals SS1 and SS2, the orientation determining means 4 is enabled to deduce the absolute orientation of antenna array 3, i.e. the direction of the main beam emitted (or received) by antenna array 3.

Note that with only one received position signal, e.g. position signal SS1, only azimuth, elevation and distance can be determined, not the point of compass, i.e. the absolute orientation of antenna array 3 in a terrestrial coordinate system. Due to the fact that BTS 1 does not move, a minimum of two measured position signals from two different antenna elements 3.1, 3.2 is necessary for to correctly determine the orientation of antenna array 3. More position signals could be received by further antenna elements, e.g. elements 3.3 or 3.4 in Fig. 1, of antenna array 3 in order to enhance orientation determining accuracy.

The deduced orientation, i.e. a corresponding signal, is then transmitted to orientation adjusting means 5 which commands motor means 6 to correctly adjust the orientation of antenna array 3 in order to enable transmission T to said dedicated terminal/area 2.

Alternatively or additionally, said orientation information can also be transmitted to input/output unit 5a for displaying said information to a service/maintenance personnel and for enabling manually and individually directing the main beam of antenna array 3, e.g. via motor means 3. In other words, the main beam of antenna array 3 can also be adjusted manually by using I/O means 5a and the orientation information provided by determining means 4.

As will be appreciated by a person skilled in the art, the proposed beam-forming solution can also be used for to avoid interference in a radio-based communication system. If an interfering radio signal, e.g. the signal indicated by means of arrow R in Fig. 1 is known which has its origin in a certain direction from BTS 1, by means of adjusting antenna array 3 as previously described the (received) interfering signal can be nulled (i.e., no reception sensitivity in the direction of the interference signal) and beams of the signals transmitted and/or received by BTS 1 can be re-adjusted to a new direction in order to avoid interference.

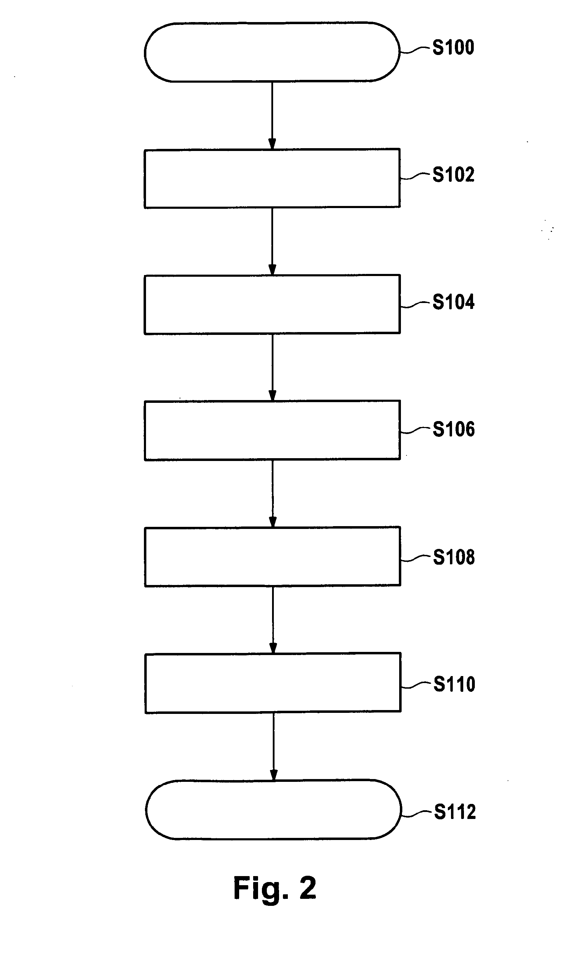

Fig. 2 shows a flow chart of an embodiment of the method in accordance with the present invention.

The method starts with step S100. In subsequent step S102, a first position signal, e.g. a satellite position signal (comprising signals from at least four different satellites, see above), is received by means of a first antenna element. Then, in step S104, at least a second position signal, e.g. a satellite position signal, is received by a second antenna element. Position signals received in steps S102 and S104, respectively, are transmitted to a position determining means.

In subsequent step S106, said position determining means is used for determining an absolute orientation of the antenna array comprising said first and second antenna elements.

Then, in step S108, said orientation information is used to adjust or re-direct the antenna array in accordance with predefined beam-forming requirements, e.g. to increase an operation range of the antenna array and transmit and receive direction with respect to dedicated terminals or spatial areas.

Transmission or reception of radio signals then occurs in subsequent step S110.

The method terminates with subsequent step S112.

In this way, the present invention enables transmitting and receiving (nulling) a radio beam to/from a certain direction without adaptive beam-forming methods and without a priori knowledge about a local position and point of compass of a BTS.

## Claims

1. A method for controlling beam-forming at a base station (1) in a radio-based communication system, said base station (1) using an antenna array (3), **characterised by** the steps of:
- receiving a first position signal (SS1) through a first antenna element (3.1) of the antenna array (3);
- receiving a second position signal (SS2) through a second antenna element (3.2) of the antenna array (3);
- determining from the first and second position signals (SS1, SS2) an orientation of said antenna array (3);
- adjusting the orientation of the antenna array (3) in accordance with the determined orientation.

2. The method of claim 1, **characterised in that** the first and second position signals (SS1, SS2) are satellite position signals.

3. The method of claim 1, comprising nulling an interfering radio signal in a given direction from the base station (1) by adjusting the orientation of the antenna array (3).

4. A base station (1) for use in a radio-based communication system, comprising an antenna array (3) for transmitting (T) and receiving (R) radio signals, said antenna array (3) comprising a plurality of antenna elements (3.1-3.4), **characterised by**:
- a first antenna element (3.1) of said plurality of antenna elements (3.1-3.4) being adapted to receive a first position signal (SS1);
- a second antenna element (3.2) of said plurality of antenna elements (3.1-3.4) being adapted to receive a second position signal (SS2);
- means (4) for determining from said first and second position signals (SS1, SS2) an orientation of said antenna array (3);
- means (5, 6) for adjusting the orientation of the antenna array (3) in accordance with the determined orientation.

5. The base station of claim 4, **characterised in that** the first and second position signals (SS1, SS2) are satellite position signals, and **in that** the first and second antenna elements (3.1, 3.2) are adapted to receive said satellite position signals.

6. The base station of claim 4, **characterised in that** said means (4) for determining the orientation of the antenna array (3) comprise a GPS receiver module (4a).

7. The base station of claim 4, **characterised in that** said means (5, 6) for adjusting the orientation of the antenna array (3) are further adapted to null an interfering radio signal in a given direction from the base station (1).
